# EUROPÄISCHE PATENTANMELDUNG

(11) **EP 1 630 308 A2**
(43) Veröffentlichungstag der Anmeldung: **01.03.2006**
(21) Anmeldenummer: 05012406.4
(22) Anmeldetag: 09.06.2005
(51) Int. Cl.: E03F 5/02, E02D 29/12, F16L 21/03

(54) **Schachtfertigteil aus Beton**

(30) Priorität: 25.08.2004 DE 102004041301; 08.12.2004 DE 102004059269
(71) Anmelder: Georg Prinzing GmbH & Co. KG Betonformen- und Maschinenfabrik, 89143 Blaubeuren (DE)
(72) Erfinder: Kraiss, Richard, 89150 Laichingen-Suppingen (DE)
(74) Vertreter: Kratzsch, Volkhard

(57) **Zusammenfassung**

Die Erfindung betrifft ein Schachtfertigteil aus Beton od.dgl. für Schachtbauwerke, das ein aus einem axial vorstehenden Bund mit äußerer Ringfläche und einer mit Axialabstand von der äußeren Ringfläche zurückgesetzten inneren Ringfläche gebildetes Glockenmuffenende aufweist und im Bereich des Glockenmuffenendes mit mindestens einer Abstützeinrichtung versehen ist. Letztere weist an der inneren Ringfläche des Glockenmuffenendes mindestens ein abstehendes, daran mit seiner Innenfläche flächig abstützbares, lastausgleichendes Lastübertragungselement auf, dessen der Innenfläche abgewandte und gegenüberliegende Seite mit mindestens einer Stützfläche zur zumindest im Wesentlichen flächigen Abstützung an einer Ringfläche am Spitzende eines nächstfolgenden unteren Schachtfertigteils versehen ist. Das mindestens eine Lastübertragungselement ist derart beschaffen, dass bei vertikaler Belastung des Schachtfertigteils und Abstützung dieses über das mindestens eine Lastübertragungselement am unteren Schachtfertigteil eine Formänderung des Lastübertragungselements geschieht, die eine Vergrößerung zumindest der Stützfläche und Auflagefläche dieser herbeiführt.

## Beschreibung

Die Erfindung bezieht sich auf ein Schachtfertigteil aus Beton mit den Merkmalen des Oberbegriffs des Anspruchs 1.

Schachtbauwerke werden in der Baugrube aus Schachtfertigteilen zusammengesetzt. Bei diesen handelt es sich um folgende unterschiedlichen Bestandteile: Schachtunterteile mit Anschlussöffnungen für Rohrleitungen, die am oberen Ende ein Spitzende aufweisen, ferner Schachtringe, die unten ein Glockenmuffenende und oben ein Spitzende aufweisen, sowie Schachthälse, Konen oder dergleichen, die unten mit einem entsprechenden Glockenmuffende versehen sind.

Gemäß der europäischen Anmeldung EP 0 634 532 B1 ist zu Lastübertragung ein Ausgleichskörper vorgesehen mit einem inneren Hohlraum, der mit Sand gefüllt ist. Diese Lösung hat sich in der Praxis bewährt.

Bei einer weiteren Patentanmeldung (EP 1 104 825 A2) sind mehrere Kunststoffteile im Bereich der äußeren Ringfläche des Glockenmuffenendes eines Schachtfertigteils einbetoniert. Diese Gestaltung hat folgende Nachteile. Die Kunststoffteile können beim Transport und bei der Lagerung auf der Baustelle beschädigt und herausgerissen werden, da die Schachtfertigteile auf der Baustelle sehr häufig mit dem unteren Glockenmuffenende und dabei dessen äußerer Ringfläche auf Stützflächen, zum Beispiel im Gelände, auf Plätzen oder dergleichen, abgestellt werden. Auch ein versetztes Stapeln von Schachtfertigteilen übereinander auf dem Lagerplatz ist nur mit Schwierigkeiten möglich, weil immer darauf geachtet werden muss, dass die Schachtfertigteile nicht mit den im Bereich der äußeren Ringfläche befindlichen, dort überstehenden Kunststoffteilen aufstehen, wobei die Gefahr besteht, das letztere punktuell zerdrückt werden. Ein weiterer Nachteil liegt darin, dass die Kunststoffteile aus einem solchen kriechenden Material bestehen, dessen kriechende Eigenschaften im Prinzip nicht gestoppt werden können, so dass nach einer gewissen Zeit die Abstützeinrichtung mit den Kunststoffteilen so weit zusammengedrückt ist, dass die übereinander gesetzten Schachtfertigteile Betonkontakt bekommen und Punktlasten auftreten. Dies wird dadurch noch begünstigt, dass die einzelnen Kunststoffteile mit einem relativ großen Fußteil im Bereich der äußeren Ringfläche des Glockenmuffenendes einbetoniert sind.

Durch das Zusammendrücken des überstehenden Kopfteils des jeweiligen Kunststoffteils und Eindrücken dieses in dessen Fußteil entsteht im Fußteil ein radialer Druck, der auf den Beton ausgeübt wird, wodurch der Beton am äußeren Rand des Glockenmuffenendes nach außen abplatzen kann und außerdem der kriechende Werkstoff der Kunststoffteile nach außen wegkriechen kann. Die Unebenheiten des oberen Randes können zwischen den Kunststoffteilen liegen und dort Punktlasten verursachen. Dies ist insbesondere bei Schachtunterteilen der Fall. Bedingt durch die Aussparungen sind über den Anschlussöffnungen für Rohre an den Schachträndern Erhöhungen vorhanden, die statisch besonders empfindlich sind, weil darunter die Anschlussöffnung angebracht ist.

Der Erfindung liegt die Aufgabe zugrunde, Schachtfertigteile aus Beton od. dgl. der eingangs genannten Art zu schaffen, bei denen die vorstehend geschriebenen Nachteile beseitigt sind, der Materialeinsatz und die Kosten reduziert werden und mindestens eine Abstützeinrichtung geschaffen und so angeordnet ist, dass diese geschützt platziert und dadurch auch das Schachtfertigteil geschützt ist.

Die Aufgabe ist bei einem Schachtfertigteil aus Beton der eingangs genannten Art gemäß der Erfindung durch die Merkmale im Anspruch 1 gelöst. Dadurch, dass das mindestens eine Lastübertragungselement der Abstützeinrichtung an der inneren Ringfläche des Glockenmuffenendes des Schachtfertigteils angeordnet ist, ist das Lastübertragungselement vor Beschädigung und Schmutz geschützt im Inneren des Glockenmuffenendes angeordnet. Bei ringförmiger Gestaltung wird dadurch zugleich beim Zusammenfügen der Schachtfertigteile ein Fugenspalt, der zwischen der inneren Ringfläche des oberen und der Ringfläche des Spitzendes des unteren Schachtfertigteils vorhanden ist, durch das mindestens eine Lastübertragungselement verschlossen. Der Querschnitt und die Werkstoffeigenschaften des mindestens einen Lastübertragungselements lassen sich so festlegen, dass bei planmäßiger Belastung der Schachtfertigteile und dadurch gebildeten Schachtbauwerke eine bleibende Formänderung des mindestens einen Lastübertragungselements erfolgt und sich somit die Auflageflächen vergrößern und keine unzulässigen Spannungen an den Schachtfertigteilen entstehen. Die durch die bleibende Stauchung des mindestens einen Lastübertragungselements erfolgende Vergrößerung der Auflageflächen geschieht sowohl in Umfangsrichtung als auch quer dazu in der Breite des Lastübertragungselements. Dadurch erhöht sich die Flächenpressung nicht weiter. Hinsichtlich der Schachtfertigteile könnten unzulässige Spannungen die Flächenpressung auf den Beton an den Auflageflächen sowie Biege- und Schubspannungen im Beton sein. Obwohl die vertikalen Kräfte bei der Belastung der Schachtfertigteile bis zur maximalen Kraft zunehmen, steigen die Schubspannungen und Biegespannungen in den Schachtfertigteilen auch bei der Vergrößerung der Stützfläche und Auflagefläche nicht an. Das mindestens eine Lastübertragungselement ist so ausgelegt, dass bei der maximalen Kraft das Lastübertragungselement in etwa mit seiner gesamten Auflagefläche an der Ringfläche am Spitzende eines nachfolgenden unteren Schachtfertigteils aufliegt und die vertikale Kraft somit gleichmäßig übertragen wird. Nach einer einmaligen starken Belastung federt das Lastübertragungselement nicht zurück und verformt sich auch nicht weiter, so dass ein etwaiger Betonkontakt und Punktlasten nicht zu befürchten sind.

Weitere Erfindungsmerkmale und vorteilhafte Ausgestaltungen ergeben sich aus den Unteransprüchen. Die Abstützeinrichtung kann zusätzlich zu dem mindestens einen Lastübertragungselement zumindest eine Kompressionsdichtung aufweisen. Diese kann aus einem Elastomer gebildet und elastisch verformbar sein. Dabei kann die mindestens eine Kompressionsdichtung ein eigenes, von dem mindestens einen Lastübertragungselement separiertes Bauteil sein. Dann liegen zwei unterschiedliche Bauteile vor, von denen zum Beispiel das mindestens eine Lastübertragungselement, das plastisch verformbar ist, eine größere Härte aufweist als die elastisch verformbare Kompressionsdichtung.

Stattdessen können das mindestens eine Lastübertragungselement und die mindestens eine Kompressionsdichtung auch ein einstückiges Dichtelement bilden. Auch bei diesem ist die Kompressionsdichtung elastisch verformbar, während das mindestens eine Lastübertragungselement plastisch verformbar ist. Das einstückige Dichtelement lässt sich durch Koextrudieren zweier verschiedener Materialien in einem Spritzvorgang herstellen, bei dem Komponenten unterschiedlicher Härte untrennbar zu einer Einheit verbunden werden. Dies ist kostengünstig. Durch ein einstückiges Dichtelement wird außerdem die Anzahl der Einzelbauteile reduziert und damit auch eine Vereinfachung bei der Herstellung der Schachtfertigteile und dadurch gebildeten Schachtbauwerke erreicht. Sowohl bei der zweiteiligen als auch bei der einteiligen Gestaltung lassen sich hinsichtlich des mindestens einen Lastübertragungselements dessen Eigenschaften besonders an die Erfordernisse anpassen.

Gegenstand der Erfindung ist ferner ein Verfahren zur Herstellung eines Schachtfertigteils entsprechend Anspruch 48 und 49.

Gegenstand der Erfindung ist ferner eine Abstützeinrichtung für Schachtfertigteile dieser Art, wobei die Abstützeinrichtung gekennzeichnet ist durch deren Ausbildung mit den Merkmalen in einem oder mehreren der Ansprüche 1 bis 49, die die Abstützeinrichtung betreffende Merkmale enthalten. Die Abstützeinrichtung kann je nach Gestaltung allein aus mindestens einem Lastübertragungselement gebildet sein, insbesondere dann, wenn dieses so gestaltet ist, dass es zusätzlich zur Lastübertragung auch dichtend ist und somit den zwischen den Ringflächen übereinander sitzender Schachtfertigteile gebildeten Ringspalt abdichten kann. Dies ist zum Beispiel insbesondere bei einem mindestens einen Lastübertragungselement der Fall, wie es in den Ansprüchen 26 bis 33 definiert ist. In diesem Fall ist das mindestens eine Lastübertragungselement zumindest teilweise aus einem Elastomer gebildet, wobei zumindest der Bereich der Stützlippen elastisch verformbar ist, um dadurch auch eine entsprechende Dichtwirkung zu erzielen.

Weitere Einzelheiten und Vorteile der Erfindung ergeben sich aus der nachfolgenden Beschreibung, auf die zur Vermeidung von Wiederholungen hier verwiesen ist.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und als erfindungswesentlich offenbart zu gelten haben. Dabei sind alle in der vorstehenden und folgenden Beschreibung erwähnten Merkmale und auch die allein aus der Zeichnung entnehmbaren Merkmale weitere Bestandteile der Erfindung, auch wenn sie nicht besonders Hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: einen schematischen senkrechten Schnitt eines Teils eines aus zwei übereinandergesetztenSchachtfertigteilen gebildeten Schachtbauwerks gemäß einem ersten Ausführungsbeispiel,
- Fig. 2: einen schematischen senkrechten Schnitt eines Teils eines Schachtfertigteils entsprechend Fig. 1 im Verlauf der Herstellung dieses in einer Form,
- Fig. 3a: einen schematischen Schnitt des Lastübertragungselements des oberen Schachtfertigteils in Fig. 1 und 2, in größerem Maßstab,
- Fig. 3b: eine schematische Seitenansicht des Lastübertragungselements in Fig. 3a,
- Fig. 4: einen schematischen senkrechten Schnitt von Teilen zweier übereinandergesetzter Schachtfertigteile gemäß einem zweiten Ausführungsbeispiel,
- Fig. 5: einen schematischen senkrechten Schnitt eines Teils einer Untermuffe mit daran gehaltenem Lastübertragungselement gemäß dem zweiten Ausführungsbeispiel in Fig. 4,
- Fig. 6: einen schematischen senkrechten Schnitt eines Teils eines aus zwei übereinandergesetzten Schachtfertigteilen gebildeten Schachtbauwerks gemäß einem dritten Ausführungsbeispiel,
- Fig. 7: einen schematischen senkrechten Schnitt etwa entsprechend demjenigen in Fig. 2 des Schachtfertigteils gemäß dem dritten Ausführungsbeispiel in Fig. 6,
- Fig. 8: einen schematischen senkrechten Schnitt etwa entsprechend demjenigen in Fig. 6 gemäß einem vierten Ausführungsbeispiel,
- Fig. 9: einen schematischen senkrechten Schnitt etwa entsprechend demjenigen in Fig. 6 eines fünften Ausführungsbeispieles.

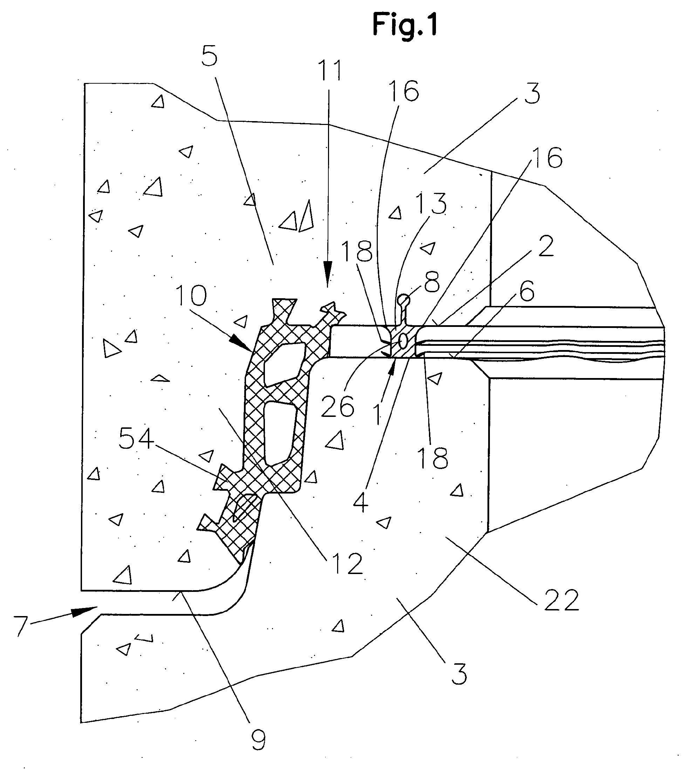

In Fig. 1 bis 3b ist schematisch ein erstes Ausführungsbeispiel von Schachtfertigteilen aus Beton od.dgl. für durch Übereinandersetzen zu bildende Schachtbauwerke 7 gezeigt. Dargestellt ist der Querschnitt eines Teils der Fügung von zwei übereinandergesetzten Schachtfertigteilen 3, von denen der untere Schachtfertigteil 3 z. B. ein Schachtring oder ein Unterteil darstellen kann, das am oberen Ende ein Spitzende 22 mit oberer Ringfläche 6 aufweist, die innen verläuft. Der darüber befindliche Schaftfertigteil 3 besteht z.B. ebenfalls aus einem Schachtring oder aus einem Konus. Dieser weist ein Glockenmuffenende 5 auf, das aus einem axial nach unten vorstehenden Bund 12 mit äußerer Ringfläche 9 und einer mit Axialabstand von der äußeren Ringfläche 9 nach oben hin zurückgesetzten inneren Ringfläche 2 gebildet ist. Mit dieser äußeren Ringfläche 9 werden gefertigte Schachtfertigteile 3 häufig auf dem Gelände, Plätzen od. dgl. Flächen abgestellt. Im Bereich des Glockenmuffenendes 5 befindet sich mindestens eine allgemein mit 11 bezeichnete Abstützeinrichtung. Diese weist an der inneren Ringfläche 2 des Glockenmuffenendes 5 mindestens ein abstehendes, daran mit seiner Innenfläche 13 flächig abstützbares, lastausgleichendes Lastübertragungselement 1 auf. Bei diesem ist dessen der Innenfläche 13 abgewandte und gegenüberliegende Seite mit mindestens einer Stützfläche 4 zur zumindest im wesentlichen flächigen Abstützung an der Ringfläche 6 des Spitzendes 22 des unteren Schachtfertigteils 3 versehen ist.

Das mindestens eine Lastübertragungselement 1 der Abstützeinrichtung 11 ist derart beschaffen, dass bei vertikaler Belastung des Schachtfertigteils 3 und Abstützung dieses über das Lastübertragungselement 1 am unteren Schachtfertigteil 3 eine derartige Formänderung des Lastübertragungselements 1 geschieht, die eine Vergrößerung zumindest der Stützfläche 4 und Auflagefläche dieser, u. U. aber auch noch eine Vergrößerung der Innenfläche 13, herbeiführt. Das Lastübertragungselement 1 ist an der inneren Ringfläche 2 des Glockenmuffenendes 5 gehalten, mit besonderem Vorteil z. B. dadurch, dass das Lastübertragungselement 1 durch bei der Herstellung des Schachtfertigteils 3 erfolgtes Einbetonieren mindestens eines Verankerungsteils 8 des Lastübertragungselements 1 gehalten ist. Hierbei ist das Lastübertragungselement 1 mittels des mindestens einen Verankerungsteils 8 somit im oberen Schachtfertigteil 3 und dort an der inneren Ringfläche 2 einbetoniert und fest verankert. Der mindestens eine Verankerungsteil 8 ist einstückig mit dem übrigen Teil des Lastübertragungselements 1 und dient allein der Halterung. Die obere Ringfläche 6 am Spitzende 22 weist fertigungsbedingt Unebenheiten auf. Beim Übereinandersetzen zweier Schachtfertigteile 3 und geringer Belastung kann das Lastübertragungselement 1 mit seiner unteren Stützfläche 4 nur stellenweise auf der Ringfläche 6 aufliegen. Mit zunehmender Belastung vergrößert sich die unterseitige Stützfläche 4 kontinuierlich durch entsprechende Formänderung des Lastübertragungselementes. Der mindestens eine Verankerungsteil 8 ist z. B. im Querschnitt relativ dünn. Dadurch kann allenfalls in geringem Umfang beim Einbetonieren eine Kerbwirkung entstehen. Aufgrund der flächigen Anlage des Lastübertragungselements 1 an der inneren Ringfläche 2 kann das Lastübertragungselement 1 sich bei Belastung durch z. B. plastische Verformung in der Breite vergrößern, ohne dass die Gefahr besteht, dass infolge Kerbwirkung Beton horizontal weggedrückt wird. Ist als Abstützeinrichtung 11 allein mindestens ein Lastübertragungselement 1 in beschriebener Weise vorgesehen, so ist durch dessen Einbetonieren im Schachtfertigteil 3 dieser montagefertig. Das Lastübertragungselement 1 ist aufgrund der Anbringung an der inneren Ringfläche 2 geschützt vor Schmutz und Beschädigung innerhalb des Glockenmuffenendes 5 untergebracht. Beim Zusammenfügen der Schachtfertigteile 3 wird der innere Fugenspalt zwischen den Ringflächen 2 und 6 durch das mindestens eine Lastübertragungselement 1 bei dessen ringförmiger umlaufender Gestaltung verschlossen. Der Querschnitt und die Werkstoffeigenschaften des Lastübertragungselements 1 sind derart gewählt, dass bei vertikaler Belastung der Schachtfertigteile 3 durch Gewichtskraft und/oder Verkehrslast und/oder Erddruck eine bleibende Formänderung eintritt und sich somit zumindest die untere Stützfläche 4, ggf. auch die obere Innenfläche 13, vergrößert und keine unzulässigen Spannungen, die Biege- und Schubspannungen im Schachtfertigteil 3 sein könnten oder durch die Flächenpressung an der Ringflächen 2 und 6 erzeugt werden könnten, entstehen. Durch die bleibende Stauchung des mindestens einen Lastübertragungselements 1 bei Belastung vergrößert sich die Auflagefläche sowohl in Umfangsrichtung als auch in der Breite. Dadurch erhöht sich die Flächenpressung nicht weiter. Von Vorteil ist ferner, dass das mindestens eine Lastübertragungselement 1 Material- und Konstruktionseigenschaften hat, die sich statisch einwandfrei berechnen lassen und ein einfaches Konstruktionsprinzip haben, welches sich bei allen Schachtfertigteilen 3 anwenden lässt. Die Herstellung und der Einbau des Lastübertragungselements 1 sind einfach und kostengünstig. Das Lastübertragungselement 1 ist im eingesetzten Zustand geschützt vor Beschädigung und Schmutz platziert.

Auch dann, wenn die vertikalen Belastungskräfte auf die Schachtfertigteile 3 bis zu einer maximalen Kraft zunehmen, steigen die Schubspannungen und Biegespannungen in den Schachtfertigteilen 3 nicht weiter an; denn das Lastübertragungselement 1 ist so ausgelegt, dass bei der maximalen Kraft das Lastübertragungselement 1 zumindest im wesentlichen mit seiner gesamten Stützfläche 4 sowie Innenfläche 13 am Schachtfertigteil 3 anliegt und die Kraft somit gleichmäßig übertragen wird. Nach einer einmaligen starken Belastung federt das Lastübertragungselement 1 nicht zurück. Es verformt sich auch nicht weiter. Bei derart zusammengesetzten Schachtbauwerken 7 ist deren Standsicherheit dadurch sichergestellt, dass hinsichtlich des einen Lastübertragungselements 1 dessen Querschnitt, Länge, Beginn z. B. der Fließgrenze des Materials, maximal plastische Verformung, d. h. Stauchung des Querschnitts, entsprechend festgelegt werden, und zwar derart, ohne dass dabei etwaige Schäden, z. B. Risse, am Lastübertragungselement 1 entstehen. Ausgehend von genormten Festlegungen der Schachtfertigteile 3 und des so gebildeten Schachtbauwerks 7 ist das mindestens eine Lastübertragungselement 1 in Bezug auf Abmessungen, Festigkeit und Dehnung so ausgelegt, dass am Gesamtbauwerk 7 eine sichere, nicht federnde Übertragung aller senkrechten Lasten sichergestellt ist.

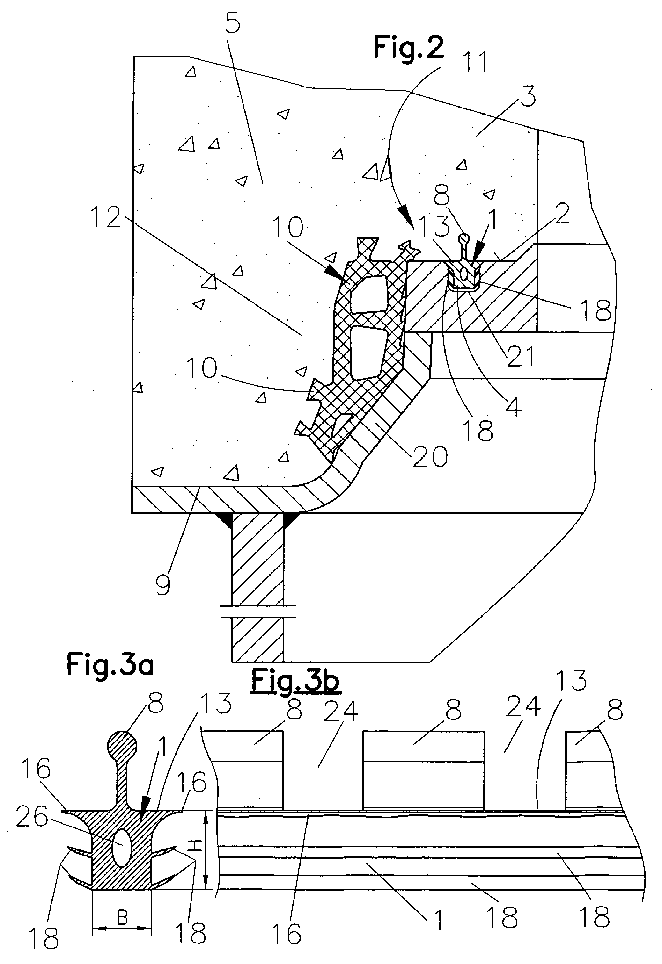

Wie sich aus Fig. 1 und 2 ergibt, ist das mindestens eine Lastübertragungselement 1 auf der inneren Ringfläche 2 etwa mittig und symmetrisch zu deren radialer Breite angeordnet. An dieser Stelle kann das Spitzende 22 den höchsten Druck aufnehmen.

Die Abstützeinrichtung 11 kann, wie nicht weiter gezeigt ist, zumindest drei auf der inneren Ringfläche 2 des Glockenmuffenendes 5 in etwa gleichen Umfangswinkelabständen voneinander angeordnete, jeweils gleich gestaltete Lastübertragungselemente 1 aufweisen. Dies ist möglich bei geringeren Belastungen und geringeren Unebenheiten. Statt dessen kann das mindestens eine Lastübertragungselement 1 auf der inneren Ringfläche 2 des Gockenmuffenendes 5 auch als über dessen gesamten Umfang sich erstreckender geschlossener Ring ausgebildet sein. So kann das mindestens eine Lastübertragungselement 1 aus einem zu einem Ring geschlossenen Längsprofil gebildet sein, dass an den Enden z. B. durch Kleben, Schweißen od. dgl. verbunden ist. Das mindestens eine Lastübertragungselement besteht hierbei z. B. aus einem Strangpressprofil, kann aber statt dessen auch aus einem Spritzgießteil gebildet sein. Bei der Ausbildung als Ring wird der gesamte Umfang des Schachtfertigteils 3 zur Lastübertragung genutzt. Dies ermöglicht es, für das mindestens eine Lastübertragungselement 1 einen sehr kleinen Querschnitt zu wählen, so dass nur ein geringer Materialbedarf dafür erforderlich ist. Von Vorteil ist dabei ferner, dass durch die Ringform die zwischen den Ringflächen 2 und 6 gebildete Ringfuge weitgehend verschlossen ist. Von Vorteil kann es sein, wenn das mindestens eine Lastübertragungselement 1 dichtend ist, so dass dann diese genannte Fuge zusätzlich auch dicht verschlossen ist.

Mit Vorteil ist das mindestens eine Lastübertragungselement 1 aus Kunststoff gebildet. Es kann aus einem thermoplastischen Kunststoff bestehen. Von Vorteil kann es sein, wenn das mindestens eine Lastübertragungselement aus einem Elastomer besteht. Als Kunststoffmaterial für das Lastübertragungselement 1 kommt z. B. Polyethylen in Betracht. Von Vorteil kann es sein, wenn das mindestens eine Lastübertragungselement 1 derart beschaffen ist, dass bei Vertikalbelastung dessen bleibende Formänderung geschieht. Die Formänderung kann durch Fließen oder Kriechen bis zu einem gewissen Grade geschehen. Von Bedeutung ist, dass das mindestens eine Lastübertragungselement 1 bei Vertikalbelastung nicht federnd ist. Die Festigkeit und Härte des Materials, z. B. des Kunststoffs, sind so gewählt, dass nur in geringem Umfang überhaupt eine elastische Verformung auftritt. Ein Zurückfedern nach der Entlastung des mindestens einen Lastübertragungselements 1 geschieht nur in einem sehr vernachlässigbaren Umfang. Je nach Materialgestaltung für das Lastübertragungselement 1 ist auch ein zumindest in Grenzen nicht kriechender Kunststoff vorteilhaft, sofern ein Ende der Verformung bis hin zur plastischen Verformung übersehbar und berechenbar ist und der Kriechvorgang reproduzierbar bei Belastung gestoppt ist. Ein thermoplastischer Kunststoff als Material für das Lastübertragungselement 1 hat den Vorteil, dass dieser sich sehr gut zum Strangpressen eignet und hinsichtlich seiner Materialeigenschaften sehr gut für die Anforderungen an das Lastübertragungselement 1 ausgelegt werden kann. Bei der Gestaltung aus Polyethylen macht man sich zunutze, dass dieses Material im Schachtbau anerkannt ist für sein resistentes Verhalten in Bezug auf chemische Angriffe. Bei der Gestaltung des Lastübertragungselements 11 aus einem geschlossen Ring wird ein entsprechendes Längsprofil auf den exakten Umfang z. B. einer Aufnahme 21, insbesondere Nut, einer Untermuffe 20 abgeschnitten und an den endseitigen Stößen durch Kleben, Schweißen od.dgl. verbunden. Dies hat den Vorteil, dass bei genügender Verpressung dieses Lastübertragungselements 1 eine zusätzliche Dichtwirkung zwischen den Ringflächen 2 und 6 erreicht wird. Das Längsprofil kann aus einem Strangpressprofil bestehen und hat dadurch den Vorteil eines kontinuierlichen Querschnitts und der kostengünstigen und rationellen Herstellung.

Das mindestens eine Lastübertragungselement 1 ist im Querschnitt etwa viereckig, insbesondere quadratisch oder rechteckig, ausgebildet. Dieser rechteckige Querschnitt kann auf relativ einfache Weise berechnet werden und lässt sich bei der Formgebung des Schachtfertigteils und beim Einbetonieren des Lastübertragungselements 1 auch sehr gut in einer Aufnahme 21, insbesondere Nut, einer Untermuffe 20 rüttelsicher halten.

In vorteilhafter Weise weist das mindestens eine Lastübertragungselement 1 eine Breite in der Größenordnung von etwa 6 mm bis 10 mm und eine Höhe in der Größenordnung von etwa 8 mm bis 10 mm auf. Damit ergibt sich ein äußerst geringer Querschnitt, der für die Lastübertragung ausreichend ist. Der Materialbedarf ist damit auf ein Minimum reduziert, so dass ein sehr kostengünstiges Lastübertragungselement 1 erreicht ist.

In vorteilhafter Weise weist das mindestens eine Lastübertragungselement 1 etwa auf der Höhe seiner Innenfläche 13 zumindest auf einer Seite, beim ersten Ausführungsbeispiel auf beiden Seiten, abstrebende Leisten 16 in Form von Dichtleisten zur dichten Anlage an der inneren Ringfläche 2 auf. Diese Leisten 16 haben auch bei der Herstellung den Vorteil der Abdichtung zur Untermuffe 20, so dass bei der Formgebung des Schachtfertigteils 3 kein Material, insbesondere Beton, in die Aufnahme 21, insbesondere Nut, der Untermuffe 20, einwandern kann. Dies zeigt anschaulich Fig. 2.

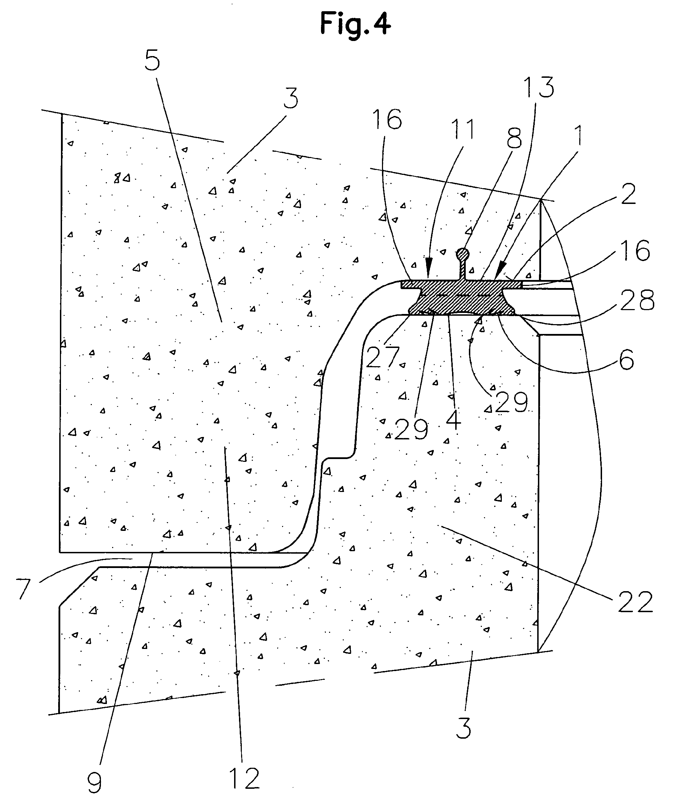

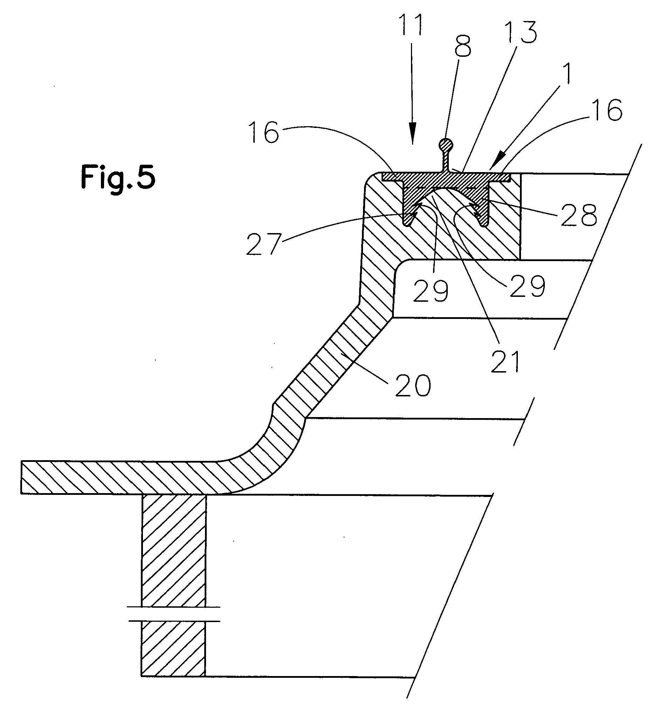

Nicht weiter dargestellt ist, dass die Innenfläche 13 und/oder die Leisten 16 des mindestens einen Lastübertragungselements 1 mit Vorsprüngen, z. B. Verzahnungen, versehen sein können, die im abgestützten Stadium die Reibhaftung in Bezug auf die innere Ringfläche 2 erhöhen und ein Zusammenziehen verhindern. Durch die flache Anlage der Innenfläche 13 und Leisten 16 an der inneren Ringfläche 2 und durch die mittige Anordnung des mindestens einen Verankerungsteils 8 wird erreicht, dass sich beim Zusammenpressen des Lastübertragungselements 1 dieses beidseitig ausbreiten kann, ohne dass hier ein starker seitlicher Druck auf das Material, insbesondere den Beton, des Schachtfertigteils 3 erfolgt. Die Vorsprünge, z. B. Verzahnungen, auf der Innenfläche 13 und/oder den Leisten 16 begünstigen das Ausbreiten, wobei diese jedoch das gegensinnige Zusammenziehen erschweren. Es versteht sich, dass diese Gestaltung mit Vorsprüngen, z. B. Verzahnungen, beim ersten Ausführungsbeispiel auch entfallen kann und z. B. beim zweiten Ausführungsbeispiel gemäß Fig. 4 und 5, das später erläutert wird, zum Zuge kommen kann.

Das mindestens eine Lastübertragungselement 1 gemäß dem ersten Ausführungsbeispiel enthält mindestens einen inneren Hohlraum 26, der durchgehend oder unterbrochen sein kann. Bei geringer Druckbelastung wird zuerst der Hohlraum 26 zusammengedrückt, wobei das Lastübertragungselement 1 mit leichtem Druck auf dem gesamten Umfang anliegt und der Spalt zwischen den Ringflächen 2 und 6 somit verschlossen wird.

Der mindestens eine Verankerungsteil 8 hat allein die Aufgabe der Halterung des mindestens einen Lastübertragungselements 1, wobei letzteres mit dem mindestens einem Verankerungsteil 8 bei der Herstellung mit einbetoniert wird.

Der mindestens eine Verankerungsteil 8 kann aus einzelnen Vorsprüngen bestehen, die unter Belassung jeweiliger Zwischenräume 24 dazwischen aufeinanderfolgen. Beim gezeigten Ausführungsbeispiel ist als Verankerungsteil 8 eine Verankerungsleiste vorgesehen, die in Längsrichtung in Abständen aufeinanderfolgende Ausschnitte 24 enthält, Ein so gestaltetes, als Strangpressprofil hergestelltes Lastübertragungselement 1 kann rationell hergestellt werden, wobei die Ausschnitte 24 nach dem Strangpressen z. B. durch eine entsprechende Ausschneidevorrichtung rationell eingebracht werden können. Die Zwischenräume zwischen den Vorsprüngen bzw. die Ausschnitte 24 haben den besonderen Vorteil, dass beim Einbetonieren diese mit Beton gefüllt werden und dadurch der Verankerungsteil 8 sicher fixiert ist, wobei verhindert ist, dass eine etwa umlaufende Kerbwirkung entsteht und es dadurch eventuell zu Abplatzungen am Beton kommt. Von besonderem Vorteil ist ferner, dass sich aufgrund dessen das Lastübertragungselement 1 relativ zum Material des Schachtfertigteils 3 in Längsrichtung, insbesondere in Umfangsrichtung, nicht verschieben kann, weder aufgrund einer Wärmeausdehnung des Lastübertragungselements 1 noch aus sonstigen Gründen.

Beim gezeigten Ausführungsbeispiel weist das mindestens eine Lastübertragungselement 1 auf der Höhe zwischen der Innenfläche 13 und der Stützfläche 4 zumindest auf einer Seite, beim gezeigten Ausführungsbeispiel symmetrisch auf beiden Seiten, abstrebende Spannleisten 18 auf, die zum rutschsicheren Spannen und Halten bei der Herstellung in einer Aufnahme 21, z. B. Nut, einer Untermuffe 20 dienen, wie dies z. B. Fig. 2 zeigt. Ein aus Kunststoff bestehendes Strangpressprofil zur Bildung des Lastübertragungselements 1 wird vor Herstellung des Schachtfertigteils 3 zunächst gebogen und danach von oben in die Aufnahme 21, insbesondere Nut, der Untermuffe 20 eingedrückt, wobei es aufgrund der Verformung das Bestreben hat, wieder aus der Aufnahme 21 herauszuspringen. Dem wirken die angeformten Spannleisten 18, die elastisch sind, in vorteilhafter Weise entgegen, da diese sich beim Eindrücken in die Aufnahme 21 umbiegen und das Lastübertragungselement 1 somit in der Aufnahme 21 rüttelsicher festspannen.

Von Vorteil kann es sein, wenn der Teil des mindestens einen Lastübertragungselements 1, der den mindestens einen Verankerungsteil 8 und/oder die Innenfläche 13 aufweist oder daran anschließt, aus einem Material größerer Härte als dasjenige der Spannleisten 18 besteht. Strangpressprofile dieser Art mit Materialien unterschiedlicher Härte lassen sich kostengünstig z. B. durch Koextrudieren zweier verschiedener Materialien in einem Spritzvorgang herstellen, die beim Spritzen untrennbar zu einer Einheit verbunden werden.

Wie sich aus Fig. 1 und 2 ergibt, weist die Abstützeinrichtung 11 zusätzlich zu dem mindestens einen Lastübertragungselement 1 zumindest eine Kompressionsdichtung 10 auf. Diese ist am Glockenmuffenende 5 durch bei der Herstellung des Schachtfertigteils 3 erfolgtes Einbetonieren mindestens eines Verankerungsteils 54 gehalten. Statt dessen kann die mindestens eine Kompressionsdichtung 10 aber auch mit Verspannung auf das Spitzende 22 des Schachtfertigteils 3 aufgezogen werden. Die mindestens eine Kompressionsdichtung 10 ist mit Vorteil elastisch verformbar. Sie stellt ein eigenständiges, vom Lastübertragungselement 1 separiertes Bauteil dar. Während das Lastübertragungselement 1 plastisch verformbar ist, ist die Kompressionsdichtung 10 elastisch verformbar. Sie ist in gleicher Weise als Ring ausgebildet und besteht z.B. aus einem Elastomer, wobei die Kompressionsdichtung 10 ebenfalls aus einem Strangpressprofil gebildet sein kann.

Bei diesem ersten Ausführungsbeispiel gemäß Fig. 1 und 2 ist somit in der inneren Ringfläche 2 das mindestens eine Lastübertragungselement 1 fest verankert über den mindestens einen, damit einstückigen Verankerungsteil 8. Die Ringfläche 6 weist fertigungsbedingt Unebenheiten auf, so dass beim Übereinandersetzen von Schachtfertigteilen 3 und bei geringer Belastung das Lastübertragungselement 1 nur stellenweise mit der Stützfläche 4 auf der Ringfläche 6 aufliegt. Mit zunehmender Belastung vergrößern sich durch plastische Verformung des Lastübertragungselements 1 diese in Kontakt stehenden Anlageflächen kontinuierlich.

In dem Glockenmuffenende 5 ist ferner die Kompressionsdichtung 10 fest verankert durch einbetonierte Verankerungsteile 54. Die Kompressionsdichtung 10 übernimmt die Abdichtung sowie die Zentrierung der übereinander stehenden Schachtfertigteile 3 und nimmt zusätzlich horizontal auftretende Kräfte auf. Das mindestens eine Lastübertragungselement 1 ist so bemessen, dass bei maximaler Belastung, z.B. durch eine Prüfkraft von 400 kN, die senkrecht auf das Schachtbauwerk 7 aufgebracht wird, keinerlei Betonkontakt entsteht. Zwischen den Schachtfertigteilen 3 und bei umlaufendem Lastübertragungselement 1 wird der gesamte Umfang der Ringfläche 6 zur Lastübertragung benutzt. Dadurch ist es möglich, einen sehr kleinen Querschnitt für das Lastübertragungselement 1 zu wählen. Gleichzeitig wird die Fuge zwischen den Ringflächen 2 und 6 verschlossen. Das Lastübertragungselement 1 ist außerdem innerhalb des Glockenmuffenendes 5 geschützt angeordnet. Nach dem Versetzen der Schachtfertigteile 3 kann jederzeit das Lastübertragungselement 1 von innen kontrolliert und überprüft werden, ob dieses Teil eingebaut ist.

Durch den sehr schmalen Körperquerschnitt des Lastübertragungselements 1 ist es auch möglich, dass dieses für Schachtfertigteile 3 eingesetzt wird mit sehr dünnen Querschnitten des Spitzendes 22. Auch hier ist es vorteilhaft, wenn das Lastübertragungselement 1 umlaufend ist, so dass der gesamte Umfang der Ringfläche 6 zur Lastübertragung genutzt werden kann.

Fig. 2 zeigt, wie das Lastübertragungselement 1 und die Kompressionsdichtung 10 auf einer Untermuffe 20 zum Einbetonieren gehalten werden. Das Lastübertragungselement 1 wird gebogen und von oben in die Aufnahme 21, z.B. Nut, der Untermuffe 20 eingedrückt und wird darin durch Reibungskraft, verstärkt durch die Spannleisten 18, rüttelsicher gehalten. Die Untermuffe 20 ist ein sehr präzises Stahlteil, das verwindungssteif ist und somit das Lastübertragungselement 1 in einer exakten Lage zum Betonieren sicher halten kann, so dass das Lastübertragungselement 1 einen ebenen Ring darstellt, der nur noch die Unebenheiten der Ringfläche 6 ausgleichen muss. Das Lastübertragungselement 1 ist in vorteilhafter Weise umlaufend und geschlossen, so dass es als Einbauteil, das in die Aufnahme 21 eingesteckt werden muss, vorliegt. Bei der Ausbildung als geschlossener Ring ist das Lastübertragungselement 1 zusätzlich dichtend und verschließt die innere Fuge zwischen den Ringflächen 2 und 6 im zusammengebauten Zustand. Im Verhältnis zur Kompressionsdichtung 10 weist das Lastübertragungselement 1 einen sehr geringen Körperquerschnitt auf, so dass es als Profil äußerst kostengünstig hergestellt und eingebaut werden kann.

In Fig. 3a und 3b sind Einzelheiten des Lastübertragungselements 1 gezeigt. Aufgrund der beschriebenen Bemessung können etwaige Unebenheiten auf der Ringfläche 6 des Spitzendes 22 problemlos ausgeglichen werden, da diese Unebenheiten maximal etwa 5 mm betragen, was durch die Höhe des Lastübertragungselements 1 problemlos ausgeglichen wird. Dabei wird das Lastübertragungselement 1 auf eine Höhe von minimal 3 mm zusammengedrückt. Beim Eindrücken in die Aufnahme 21, z.B. Nut, der Untermuffe 20, werden die an den äußeren Flanken befindlichen Spannleisten 18 umgebogen, wodurch das Lastübertragungselement 1 in der Aufnahme 21 reibschlüssig gehalten wird. Die abdichtenden Leisten 16 sorgen dafür, dass kein Material, insbesondere Betonleim, in die Aufnahme 21 einkriechen kann. Der mindestens eine Verankerungsteil 8, z.B. in Form einer Leiste, ist etwa mittig angeordnet und hat einen sehr dünnen Querschnitt und sorgt für eine formschlüssige Verankerung im Schachtfertigteil 3. Die Zwischenräume zwischen einzelnen Vorsprüngen, z.B. Ausschnitte, sorgen dafür, dass sich keine umlaufende Unterbrechung des Materialgefüges, insbesondere Betongefüges, des Schachtfertigteils 3 ergibt und die Kerbwirkung wesentlich verringert wird.

Bei dem in Fig. 4 und 5 gezeigten zweiten Ausführungsbeispiel sind für die Teile, die dem ersten Ausführungsbeispiel entsprechen, gleiche Bezugszahlen verwendet, so dass dadurch zur Vermeidung von Wiederholungen auf die Beschreibung des ersten Ausführungsbeispieles Bezug genommen ist.

Das in Fig. 4 und 5 gezeigte mindestens einen Lastübertragungselement 1 weicht von demjenigen des ersten Ausführungsbeispieles ab. Es weist auf der seiner Innenfläche 13 gegenüberliegenden Seite zwei in Querrichtung beabstandete und überstehende Stützlippen 27, 28 auf, die bei vertikaler Belastung des Schachtfertigteils 3 und Abstützung dieses über das mindestens eine Lastübertragungselement 1 am Spitzende 22 des nächstfolgenden unteren Schachtfertigteils 3 voneinanderweg spreizbar sind mit einhergehender Reibung auf der Ringfläche 6 des Spitzendes 22. Dabei sind die Stützlippen 27, 28 derart abklappbar, dass eine vergrößerte Stützfläche 4 und Auflagefläche zur Abstützung auf der Ringfläche 6 am Spitzende 22 entsteht. Fig. 4 zeigt dieses Lastübertragungselement 1 im belasteten Zustand bei gebildetem Schachtbauwerk 7 durch übereinandergesetzte Schachtfertigteile 3. Man erkennt, dass die Stützlippen 27, 28 weit voneinanderweg gespreizt sind, derart, dass diese mit ihrem im unverformten Zustand (Fig. 5) einanderzu gewandten Seiten praktisch auf gleicher Höhe verlaufen wie der mittlere Bereich der Stützfläche 4.

Dieses mindestens eine Lastübertragungselement 1 weist auf der der Innenfläche 13 gegenüberliegenden Seite einen umgekehrt etwa U-förmigen Querschnitt auf, wie dies Fig. 5 zeigt. Statt dessen ist auch ein umgekehrt etwa V-förmiger Querschnitt möglich. Die Stützlippen 27, 28 weisen auf den einanderzu gewandten Seiten Vorsprünge 29, insbesondere Verzahnungen, auf, die aufgrund erhöhter Reibung einer Rückstellung gespreizter Stützlippen 27, 28 (Fig. 4) entgegenwirken. Das mindestens eine Lastübertragungselement 1 weist ferner mindestens einen Verankerungsteil 8 auf, der wie beim ersten Ausführungsbeispiel etwa mittig angeordnet ist, und zwar hier mittig in Bezug auf die beiden Stützlippen 27, 28.

Das mindestens eine Lastübertragungselement 1 gemäß dem zweiten Ausführungsbeispiel ist zumindest auf seiner der Innenfläche 13 gegenüberliegenden Seite somit als saugnapfartig wirkender Saughalter ausgebildet. Es kann aus einem Elastomer gebildet sein.

Von Vorteil kann es sein, wenn der Teil des mindestens einen Lastübertragungselements 1, der den mindestens einen Verankerungsteil 8 und/oder die Innenfläche 13 aufweist oder daran anschließt, das heißt der durch gestrichelte Linie abgesetzte Teil, aus einem Material größerer Härte besteht als das Material, aus dem die Stützlippen 27, 28 beschaffen sind. Die Stützlippen 27, 28 sind elastisch. Beide Materialkomponenten des einstückigen Lastübertragungselements 1 können durch Koextrudieren zweier verschiedener Materialien in einem Spritzvorgang zu einer untrennbaren Einheit verbunden und hergestellt werden.

Dieses Lastübertragungselement 1 gemäß 4 und 5 hat den Vorteil, dass dessen Querschnitt beim Zusammendrücken mit den beiden Stützlippen 27, 28 auf der Ringfläche 6 entlang gleitet und dadurch, dass eine hohe Reibung entsteht, nicht oder nur schwer zurückfedern kann. Die zusätzlichen Vorsprünge 29, insbesondere die Verzahnung, erschwert eine solche Rückstellung zusätzlich. Von Vorteil ist ferner, dass die auseinandergespreizten Stützlippen 27, 28 zu einer sehr guten Dichtwirkung führen, da bei Innen- oder Außendruck jeweils die entsprechende Stützlippe 27, 28 an die Ringfläche 6 des Spitzendes 22 angedrückt wird. Ein weiterer Vorteil besteht darin, dass sich dieses Lastübertragungselement 1 in Form des Saughalters saugnapfartig verhält und somit beim etwaigen Zurückfedern ein Vakuum im Bereich der Stützfläche 4 entsteht, das ebenfalls das Zurückfedern verhindern kann. Der Querschnitt des Lastübertragungselements 1 ist so gestaltet, dass die oben befindliche Innenfläche 13, wo der mindestens eine Verankerungsteil 8 vorgesehen ist, flach an der inneren Ringfläche 2 anliegt und der Verankerungsteil 8 in Bezug auf die Stützlippen 27, 28 mittig verläuft. So kann sich das Lastübertragungselement 1 beim Zusammenpressen beidseitig ausbreiten, ohne dass hier auf das Material, insbesondere den Beton, ein starker seitlicher Druck erfolgt. Nicht gezeigt ist, dass auch im Bereich der Innenfläche 13 und/oder der auf gleicher Höhe verlaufenden abdichtenden Leisten 16 den Vorsprüngen 29 entsprechende Vorsprünge, z.B. Verzahnungen, vorgesehen sein können, die das Ausbreiten begünstigen aber das Zusammenziehen erschweren. Die Stützlippen 27, 28 können im unbelasteten Zustand (Fig. 5) eine Höhe in der Größenordnung von etwa 4 mm bis 6 mm aufweisen. Dies entspricht ungefähr der maximalen Höhe etwaiger Unebenheiten der Ringfläche 6 des Spitzendes 22, so dass gewährleistet ist, dass beim Zusammendrücken die Stützlippen 27, 28 noch im ganzen Bereich anliegen und eine entsprechende Dichtwirkung erzielt wird.

Es versteht sich, dass auch bei diesem zweiten Ausführungsbeispiel gemäß Fig. 4 und 5 die Abstützeinrichtung 11 nach Wahl zusätzlich zum mindestens einen Lastübertragungselement 1 zumindest eine Kompressionsdichtung aufweisen kann, z.B. ähnlich dem ersten Ausführungsbeispiel in Fig. 1 und 2, wobei diese Kompressionsdichtung ein eigenständiges, in Bezug auf das Lastübertragungselement 1 separates Bauteil sein kann. Statt dessen kann die Kompressionsdichtung aber auch zusammen mit dem Lastübertragungselement 1 ein einstückiges Dichtelement bilden.

Beim ersten Ausführungsbeispiel gemäß Fig. 1 und 2 ist die Aufnahme 21, insbesondere Nut, der Untermuffe 20 in Anpassung an den z.B. rechteckigen Querschnitt des mindestens einen Lastübertragungselements 1 etwa U-förmig gestaltet.

Beim zweiten Ausführungsbeispiel gemäß Fig. 4 und 5 statt dessen ist die Aufnahme 21, z.B. Nut, der Untermuffe 20 in Anpassung an die Form des nicht verformten Lastübertragungselements 1 mit den nach unten überstehenden Stützlippen 27, 28 etwa W-förmig und derart ausgebildet, dass der Boden des U z.B. etwa halbkugelförmig nach oben hin erhöht ist.

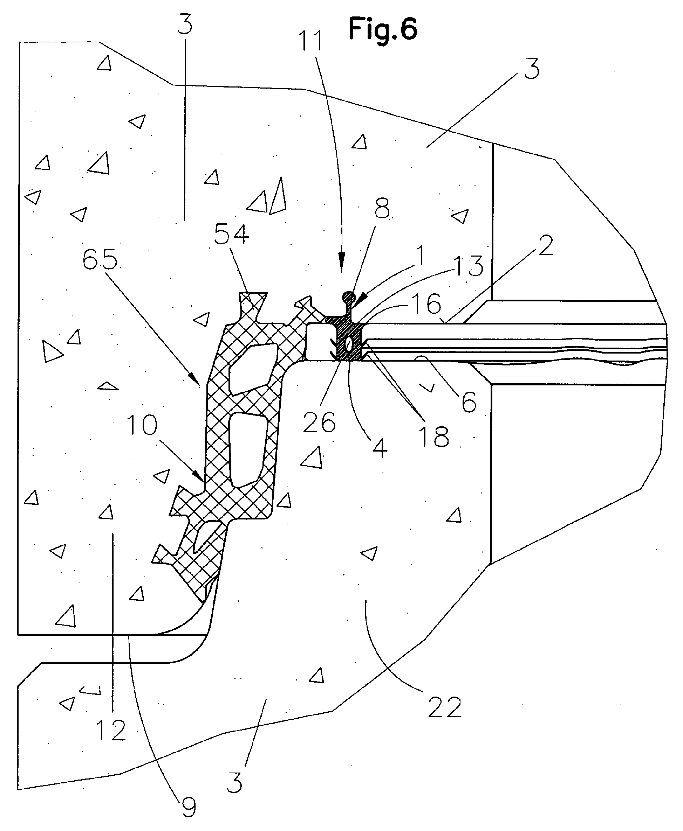

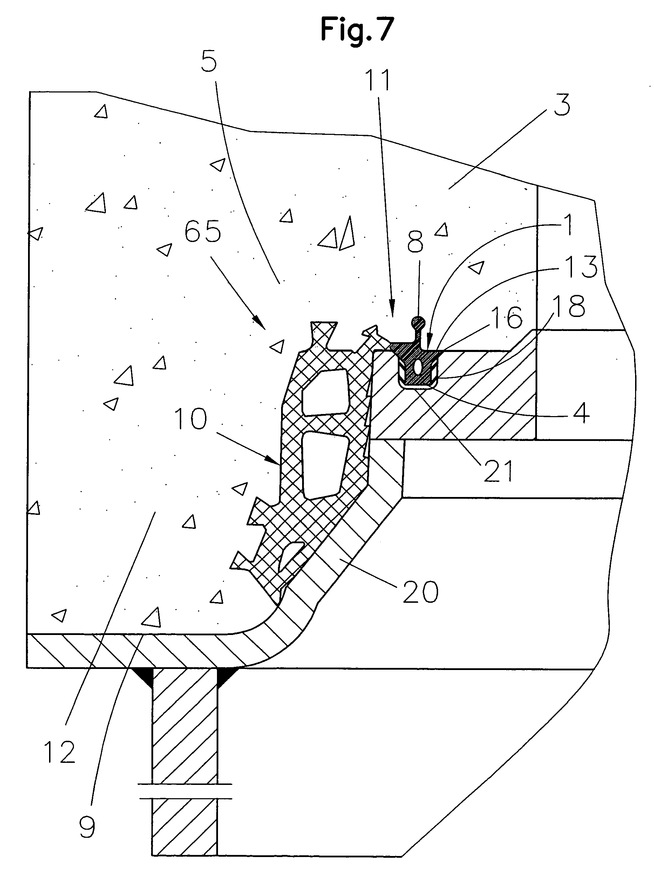

Bei dem in Fig. 6 und 7 gezeigten dritten Ausführungsbeispiel sind wiederum für die Teile, die den vorangehenden Ausführungsbeispielen entsprechen, gleiche Bezugszeichen verwendet, so dass dadurch zur Vermeidung von Wiederholungen auf die Beschreibung der vorangehenden Ausführungsbeispiele Bezug genommen ist.

In Fig. 6 und 7 weist die Abstützeinrichtung 11 zusätzlich zu dem mindestens einen Lastübertragungselement 1 zumindest eine Kompressionsdichtung 10 auf, die am Glockenmuffenende 5 durch bei der Herstellung des Schachtfertigteils 3 erfolgtes Einbetonieren zumindest eines Verankerungsteils 54 gehalten ist, soweit erforderlich und gewünscht, oder die statt dessen mit Verspannung auf das Spitzende 22 des unteren Schachtfertigteils 3 aufgezogen wird. Die mindestens eine Kompressionsdichtung 10 besteht aus einem Elastomer und ist elastisch verformbar. Auch hierfür ist es von Vorteil, wenn die Kompressionsdichtung 10 elastisch, das mindestens eine Lastübertragungselement 1 hingegen plastisch verformbar ist. Durch eine einstückige Gestaltung der Abstützeinrichtung 11 bilden das mindestens eine Lastübertragungselement 1 und die mindestens eine Kompressionsdichtung 10 ein einstückiges Dichtelement 65. Dieses besteht z.B. komplett aus einem Elastomer und hat mit Vorteil z.B. Ringform. Es kann aus einem Strangpressprofil gebildet sein, dessen Enden in beschriebener Weise durch Kleben, Schweißen od.dergl. zu einem Ring verbunden sind. Es kann statt dessen aber auch aus einem Spritzgießteil gebildet sein. Bei diesem einstückigen Dichtelement 65 weist dessen mindestens ein Lastübertragungselement 1 eine größere Härte auf als dessen mindestens eine Kompressionsdichtung 10. Beide Komponenten des Dichtelements 65 sind untrennbar zu einer Einheit verbunden, was insbesondere z.B. durch Koextrudieren zweier verschiedener Materialien verschiedener Härte in einem Spritzvorgang erfolgen kann.

Das einstückige Dichtelement 65 ist am Glockenmuffenende 5 dadurch gehalten, dass bei der Herstellung des Schachtfertigteils mindestens ein Verankerungsteil mit einbetoniert wird, z.B. der mindestens eine Verankerungsteil 8 und/oder der mindestens eine Verankerungsteil 54 der Kompressionsdichtung 10. Je nach Bedarf kann das Dichtelement 65 statt dessen aber auch mit Verspannung auf das Spitzende 22 aufgezogen sein. Das mindestens eine Lastübertragungselement 1 weist im Vergleich zum ersten Ausführungsbeispiel nur eine dichtende Leiste 16 auf, während dieses an der anderen Seite einstückig mit der Kompressionsdichtung 10 verbunden ist.

Die Gestaltung als einstückiges Dichtelement 65 ermöglicht eine sehr kostengünstige Fertigung, da nur noch ein einziges Profil hergestellt werden muss. Dieses kann hinsichtlich der Eigenschaften so aufgebaut werden, dass die Kompressionsdichtung beim Übereinandersetzen der Schachtfertigteile 3 durch Verpressen im elastischen Bereich eine einwandfreie Dichtwirkung gewährleistet und das Lastübertragungselement 1 durch Verformung im plastischen Bereich eine gleichmäßige Lastübertragung zwischen den Schachtfertigteilen 3 gewährleistet, derart, dass an keiner Stelle Betonkontakt oder Punktlasten auftreten.

Auch bei diesem Ausführungsbeispiel ist das mindestens eine Lastübertragungselement 1 nicht federnd, wobei dessen Festigkeit und Härte so gewählt sind, dass allenfalls in nur geringem Umfang eine elastische Verformung auftritt und somit auch ein Zurückfedern nach Entlastung nur in einem vernachlässigbaren Umfang erfolgt. Aufgrund der einstückigen Gestaltung des Dichtelements 65 kann bei der Herstellung des Betonfertigteils 3 das Lastübertragungselement 1 in die Aufnahme 21, z.B. Nut, der Untermuffe 20 eingedrückt werden, wobei die Kompressionsdichtung 10 außen auf die Untermuffe 20 aufgezogen wird. Dadurch ist das einstückige Dichtelement 65 rüttelsicher gehalten.

Schachtfertigteile 3 und dadurch gebildete Bauwerke 7 müssen nicht rund sein. Sie können auch rechteckig oder quadratisch sein. Auch in diesem Fall wird das einteilige Dichtelement 65 mit Vorspannung auf die zugeordnete Untermuffe 20 aufgezogen, wobei das Dichtelement 65 sehr gut auf dem gesamten Umfang gehalten ist. Bei rechteckigen Untermuffen ist somit das einteilige Dichtelement 65 in vorteilhafter Weise rüttelsicher und dichtend auf der Untermuffe 20 gehalten. Durch die Gestaltung des Dichtelements 65 aus einem Elastomer kann den verlangten Eigenschaften nach DIN 4060 und DIN EN 681-1 Rechnung getragen werden. Das Lastübertragungselement 1 ist in seinem Querschnitt und seiner Auflagefläche so bemessen, dass bei Druckbelastung die Fließgrenze überschritten wird und eine bleibende Verformung des Lastübertragungselements 1 auftritt, das heißt dieser Querschnitt ist sehr klein, so dass beim Übereinandersetzen der Schachtfertigteile 3 auf der Baustelle an Engstellen der zwischen den Ringflächen 2 und 6 vorhandenen Fuge die Fließgrenze des Elastomers überschritten wird und dadurch keine erheblichen Spannungsspitzen entstehen können. Dadurch, dass beim Dichtelement 65 die Kompressionsdichtung 10 elastisch und das Lastübertragungselement 1 plastisch verformbar ist, wird eine einwandfreie Dichtwirkung aufgrund der Kompressionsdichtung 10 zwischen den Schachtfertigteilen 3 erzielt. Das härtere Lastübertragungselement 1 verformt sich bei Überschreiten der Fließgrenze plastisch, so dass eine möglichst gleichmäßige Lastübertragung zwischen den Schachtfertigteilen 3 erreicht wird. Trotz dieser unterschiedlichen Materialeigenschaften ist das einteilige Dichtelement 65 als Profil herstellbar und als Ringteil durch Verbinden der Enden gestaltbar. Dadurch werden die Herstellungskosten wesentlich reduziert. Mit den unterschiedlichen Materialeigenschaften kann das Dichtelement 65 sehr genau auf die jeweiligen Erfordernisse des Schachtbaus angepasst werden. Da bei der Herstellung das einteilige Dichtelement 65 komplett mittels der Verankerungsteile 8, 54 einbetoniert und dadurch am Schachtfertigteil 3 gehalten wird, fallen bei der Montage von Schachtbauwerken 7 an der Baustelle keine losen Teile an, so dass Fehlerquellen weitgehend ausgeschaltet sind. Durch die Gestaltung des einstückigen Dichtelements 65 aus einem Strangpressprofil lässt sich dieses rationell und kostengünstig herstellen, auch mit unterschiedlichen Werkstoffeigenschaften entsprechend den gestellten Anforderungen für die Kompressionsdichtung 10 und das Lastübertragungselement 1.

Bei einer Variante kann das einstückige Dichtelement 65 auch mit Verspannung auf ein Spitzende 22 aufgezogen werden. Hierbei wird das Dichtelement 65 nicht durch Einbetonieren bei der Fertigung verankert, sondern es wird erst bei der Montage des Schachtbauwerks 7 in der Baugrube auf das Spitzende 22 aufgezogen und hiernach das nächste Schachtfertigteil 3 aufgesetzt. Das Dichtelement 65 ist somit ein loses Bauteil. Vorteilhaft dabei ist jedoch der reduzierte Aufwand, da ein Einbau während der Herstellung der Schachtfertigteile 3 nicht erforderlich ist.

Statt dessen kann das einteilige Dichtelement 65 bei der Herstellung des Schachtfertigteils 3 durch Gießen oder Rütteln auf einer Untermuffe 20 gehalten werden. Das Dichtelement 65 ist dabei im Umfang ca. 3 - 5% kleiner als die Untermuffe 20 und wird mit Vorspannung auf die Untermuffe aufgezogen. Ein Abrutschen oder Abheben des Dichtelements 65 während des Rüttelvorgangs wird zusätzlich vermieden, indem das Lastübertragungselement 1 in der Aufnahme 21, z.B. Nut, gehalten ist. Bei rechteckigen oder quadratischen Untermuffen ist die Vorspannung zum Andrücken des Dichtelements 65 an die Untermuffe auf den geraden Seiten nicht vorhanden, so dass in diesem Fall das einteilige Dichtelement 65 in besonders vorteilhafter Weise mit dem Lastübertragungselement 1 in der Nut gehalten wird.

Das einstückige Dichtelement 65 kann auf äußerst rationelle Weise durch Koextrudieren in einem einzigen Verfahren hergestellt werden. Mit den Eigenschaften der Kompressionsdichtung 10 und des Lastübertragungselements 1 beim Extrudieren handelt es sich um ein kontinuierliches Verfahren zum Herstellen des Dichtelements 65. Dieses Profil wird dabei rationell hergestellt und auf Rollen aufgewickelt. Zur Herstellung als Ring wird dieses Profil auf erforderliche Länge abgeschnitten und an den Enden z.B. durch Kleben, Vulkanisieren od.dergl. zu einem geschlossenen Ring verbunden, der entweder in das Schachtfertigteil 3 in dessen Glockenmuffenende 5 einbetoniert wird oder bei der Montage auf das Spitzende 22 aufgezogen wird. Beide Komponenten des einteiligen Dichtelements 65 werden bei der Herstellung durch Koextrudieren zweier verschiedener Materialien in einem Spritzvorgang untrennbar zu einer Einheit verbunden. Dadurch ist es möglich, den unterschiedlichen Materialeigenschaften für das Lastübertragungselement einerseits und die Kompressionsdichtung 10 andererseits bei der Herstellung in einem Arbeitsgang Rechnung zu tragen. Dem Extrudierwerkzeug werden zur Herstellung des Dichtelements 65 zwei unterschiedliche Materialien zugeführt, die beim Koextrudieren untrennbar zu einer Einheit verbunden werden. Die unterschiedlichen Materialien sind so gewählt, dass für die Kompressionsdichtung 10 ein elastisches Material und für das Lastübertragungselement 1 ein plastisches Material mit größerer Härte verwendet wird. Beide Materialien verschmelzen beim Extrudieren zu einer Einheit, so dass das einteilige Dichtelement 65 in vorteilhafter und rationeller Weise hergestellt werden kann und dabei die Eigenschaften genau auf die Erfordernisse des Schachtbaus abgestimmt sind. Das so sehr rationell herstellbare Dichtelement 65 hat somit optimale Eigenschaften, so dass alle Erfordernisse des Schachtbaus in äußerst günstiger Weise erfüllt werden. Einerseits wird eine vollkommene Dichtwirkung erzielt und andererseits die Standsicherheit und Langlebigkeit der Schachtbauwerke 7 sichergestellt.

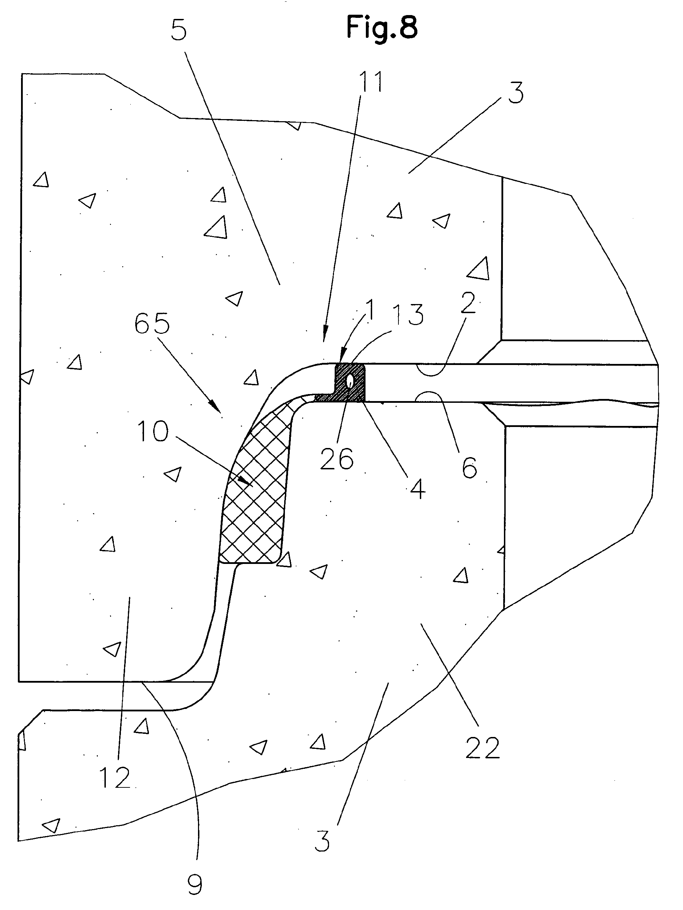

Bei dem in Fig. 8 gezeigten vierten Ausführungsbeispiel sind für gleiche Teile wiederum gleiche Bezugszahlen verwendet, so dass dadurch zur Vermeidung von Wiederholungen auf die vorangehende Beschreibung Bezug genommen ist. Bei diesem Ausführungsbeispiel ist das einteilige Dichtelement 65 abweichend vom dritten Ausführungsbeispiel gestaltet. Es wird abweichend davon als loses Teil mit Vorspannung auf das Spitzende 22 aufgezogen. Dabei legt sich das Lastübertragungselement 1 auf die Ringfläche 6 des Spitzendes 22. Durch Aufsetzen des nächstfolgenden Schachtfertigteils 3 wird die Kompressionsdichtung 10 in Spalt zwischen dem Spitzende 22 und dem Glockenmuffenende 5 zusammengepresst, wodurch die gewünschte Dichtwirkung entsteht. Das obere Schachtfertigteil 3 ruht mit der inneren Ringfläche 2 auf dem Lastübertragungselement 1. Dieses wird dabei plastisch verformt, so dass die Unebenheiten der Ringfläche 6 des Spitzendes 22 ausgeglichen werden und eine nicht federnde, sichere Lastübertragung zwischen den Schachtfertigteilen 3 sichergestellt ist. An keiner Stelle herrscht zwischen den übereinandergesetzten Schachtfertigteilen 3 etwaiger Berührungskontakt.

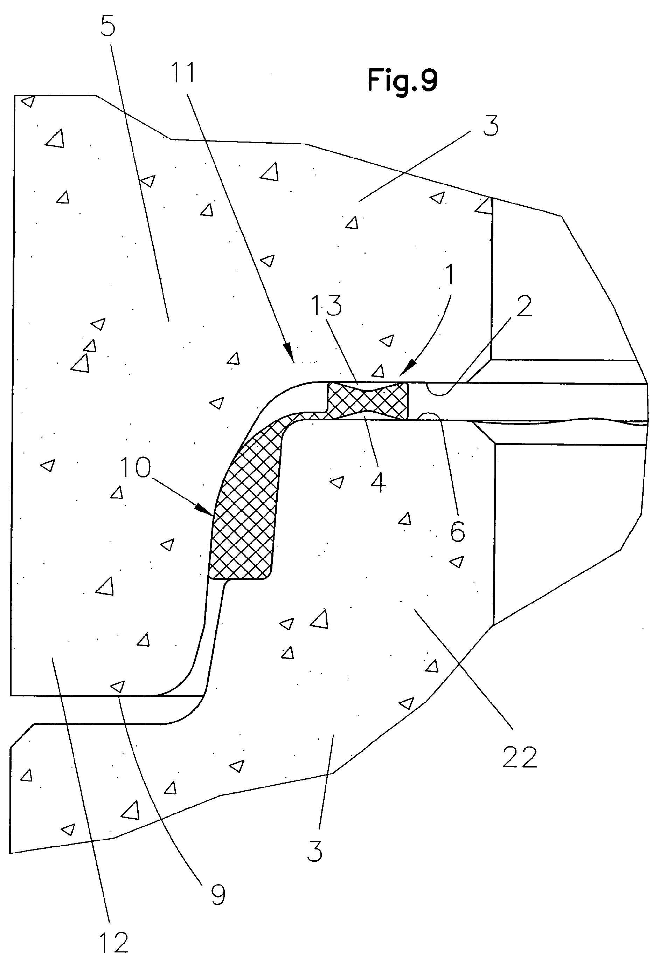

Bei dem in Fig. 9 gezeigten fünften Ausführungsbeispiel sind wiederum für gleiche Teile gleiche Bezugszahlen verwendet, so dass dadurch zur Vermeidung von Wiederholungen auf die Beschreibung der vorangehenden Beispiele Bezug genommen ist. Die Abstützeinrichtung 11 in Fig. 9 in vergleichbar mit derjenigen in Fig. 8, wobei aber das Lastübertragungselement 1 modifiziert ist. Bei diesem ist die Innenfläche 13 und die dieser gegenüberliegende Seite, wo sich die Stützfläche 4 befindet, jeweils von außen nach innen hin derart vertieft, dass bei vertikaler Belastung des Schachtfertigteils 3 und Abstützung dieses über das mindestens eine Lastübertragungselement 1 am Spitzende 22 des unteren Schachtfertigteils 3 unter Formänderung des Lastübertragungselements 1 eine Abflachung der Innenfläche 13 und/oder Außenfläche 4 mit Vergrößerung der Stützfläche und Auflagefläche entsteht. Das Material des Lastübertragungselements 1 gleitet im Bereich der Innenfläche 13 und/oder der Stützfläche 4 am Beton entlang, wobei aufgrund entstehender erhöhter Reibung ein nur schlechtes Zurückfedern möglich ist. Auch hier können auf der Innenfläche 13 und/oder Stützfläche 4 vorstehende Vorsprünge, z.B. Verzahnungen, analog dem zweiten Ausführungsbeispiel vorgesehen sein, wodurch die Rückstellung zusätzlich erschwert wird. Auch bei diesem Ausführungsbeispiel ergibt sich der Vorteil, dass sich das Lastübertragungselement 1 saugnapfartig verhält und somit beim etwaigen Zurückfedern ein Vakuum entsteht, das ebenfalls das Zurückfedern verhindern kann. Für diese Gestaltung des Lastübertragungselements 1 gelten ansonsten im Wesentlichen die Ausführungen zu demjenigen gemäß dem zweiten Ausführungsbeispiel in Fig. 4 und 5.

Gegenstand der Erfindung ist, wie anhand vorstehender Beschreibung ersichtlich ist, nicht nur ein Schachtfertigteil z.B. in Form eines Konus oder eines Schachtringes oder auch, soweit es um das Spitzende 22 geht, ein Unterteil, oder ein etwaiger Deckel, der auf ein Spitzende eines Schachtringes aufsetzbar ist, sondern auch ein Verfahren zur Herstellung derartiger Schachtfertigteile 3. Diese werden nach dem Rüttelpress- oder Gießverfahren in einer Form hergestellt, von der in den Zeichnungen gemäß Fig. 2, 4, 7 lediglich schematisch ein Teil einer Untermuffe 20 dargestellt ist, die die Form am Ende abschließt und der Formgebung des Glockenmuffenendes 5 dient. Diese Untermuffe 20, die je nach Gestaltung z.B. kreisförmig oder für die Herstellung rechteckiger oder quadratischer Schachtfertigteile 3 entsprechend rechteckig oder quadratisch ist, weist eine nach oben offene Aufnahme 21, z.B. Nut, auf, in die das mindestens eine Lastübertragungselement 1 eingedrückt wird. Auf die Untermuffe 20 wird außen die Kompressionsdichtung 10, soweit vorhanden, aufgezogen. In der nutförmigen Aufnahme 21 wird das Lastübertragungselement 1 rüttelsicher und gut gehalten durch entsprechenden Formschluss und durch über die Spannleisten 18 erhöhte Spannung, wodurch bei der Gestaltung als einstückiges Dichtelement 65 auch die Kompressionsdichtung 10 mit gehalten ist, die ohnehin durch das Aufziehen auf die Untermuffe 20 - selbst bei der zweiteiligen Gestaltung gemäß der ersten Ausführungsbeispiele - sicher auf der Untermuffe 20 gehalten ist. In den Fällen, in denen die Kompressionsdichtung 10 und/oder das mindestens eine Lastübertragungselement 1 nicht mittels der Verankerungsteile 54 bzw. 8 bei der Herstellung des Schachtfertigteils 3 mit einbetoniert wird, sondern statt dessen als loses Teil auf das Spitzende 22 des Schachtfertigteils 3 aufgezogen wird, z.B. entsprechend Fig. 8 und 9, entfällt das vorherige Anbringen an der Untermuffe 20, da dieses Aufziehen auf das Spitzende 22 erst nach der Fertigstellung geschieht.

Die Form der Aufnahme 21, insbesondere Nut, der Untermuffe 20 ist an die Kontur des mindestens einen Lastübertragungselements angepasst und z.B. U-förmig bzw. im Fall des Lastübertragungselements 1 gemäß Fig. 4 und 5 etwa W-förmig.

Gegenstand der Erfindung ist neben dem Schachtfertigteil und Verfahren zu dessen Herstellung auch eine Abstützeinrichtung 11 für derartige Schachtfertigteile 3, wobei diese Abstützeinrichtung 11 die Merkmale hat, die diesbezüglich vorstehend im Einzelnen beschrieben und in den Zeichnungen gezeigt sind und die das mindestens eine Lastübertragungselement 1 in allen Variationen und/oder die Kompressionsdichtung 10 betreffen, und zwar sowohl in der zweiteiligen Ausbildung als auch in der einstückigen Gestaltung als Dichtungseinrichtung in Form des Dichtelements 65. Allein zur Vermeidung unnötiger Wiederholungen wird hier darauf verzichtet, diese allein die Abstützeinrichtung 11 betreffenden Merkmale der einzelnen Bestandteile dieser hier zu wiederholen.

## Patentansprüche

1. Schachtfertigteil aus Beton od. dgl. für durch Übereinandersetzen zu bildende Schachtbauwerke (7), das ein aus einem axial vorstehenden Bund (12) mit äußerer Ringfläche (9) und einer mit Axialabstand von der äußeren Ringfläche (9) zurückgesetzten inneren Ringfläche (2) gebildetes Glockenmuffenende (5) aufweist und im Bereich des Glockenmuffenendes (5) mit mindestens einer Abstützeinrichtung (11) versehen ist,
**dadurch gekennzeichnet,**
**dass** die mindestens eine Abstützeinrichtung (11) an der inneren Ringfläche (2) des Glockenmuffenendes (5) mindestens ein abstehendes, daran mit seiner Innenfläche (13) flächig abstützbares, lastausgleichendes Lastübertragungselement (1) aufweist, dessen der Innenfläche (13) abgewandte und gegenüberliegende Seite mit mindestens einer Stützfläche (4) zur zumindest im wesentlichen flächigen Abstützung an einer Ringfläche (6) am Spitzende (22) eines nächstfolgenden unteren Schachtfertigteils (3) versehen ist, und dass das mindestens eine Lastübertragungselement (1) derart beschaffen ist, dass bei vertikaler Belastung des Schachtfertigteils (3) und Abstützung dieses über das mindestens eine Lastübertragungselement (1) am unteren Schachtfertigteil (3) eine eine Vergrößerung zumindest der Stützfläche (4) und Auflagefläche dieser herbeiführende Formänderung des Lastübertragungselements (1) geschieht.

2. Schachtfertigteil nach Anspruch 1,
**dadurch gekennzeichnet,**
**dass** das mindestens eine Lastübertragungselement (1) an der inneren Ringfläche (2) des Glockenmuffenendes (5) gehalten ist.

3. Schachtfertigteil nach Anspruch 1 oder 2,
**dadurch gekennzeichnet,**
**dass** das mindestens eine Lastübertragungselement (1) an der inneren Ringfläche (2) des Glockenmuffenendes (5) durch bei der Herstellung des Schachtfertigteils (3) erfolgtes Einbetonieren mindestens eines Verankerungsteils (8) des Lastübertragungselements (1) gehalten ist.

4. Schachtfertigteil nach einem der Ansprüche 1 bis 3,
**dadurch gekennzeichnet**
**dass** das mindestens eine Lastübertragungselement (1) auf der inneren Ringfläche (2) etwa mittig und symmetrisch zu deren radialer Breite angeordnet ist.

5. Schachtfertigteil nach einem der Ansprüche 1 bis 4,
**dadurch gekennzeichnet,**
**dass** die Abstützeinrichtung (11) zumindest drei auf der inneren Ringfläche (2) des Glockenmuffenendes (5) in etwa gleichen Umfangswinkelabständen voneinander angeordnete Lastübertragungselemente (1) aufweist.

6. Schachtfertigfertigteil nach einem der Ansprüche 1 bis 5,
**dadurch gekennzeichnet,**
**dass** das mindestens eine Lastübertragungselement (1) auf der inneren Ringfläche (2) des Glockenmuffenendes (5) als über dessen gesamten Umfang sich erstreckender Ring ausgebildet ist.

7. Schachtfertigteil nach einem der Ansprüche 1 bis 6,
**dadurch gekennzeichnet,**
**dass** das mindestens eine Lastübertragungselement (1) aus Kunststoff gebildet ist.

8. Schachtfertigteil nach einem der Ansprüche 1 bis 7,
**dadurch gekennzeichnet,**
**dass** das mindestens eine Lastübertragungselement (1) derart beschaffen ist, dass bei Vertikalbelastung dessen bleibende Formänderung geschieht.

9. Schachtfertigteil nach einem der Ansprüche 1 bis 8,
**dadurch gekennzeichnet,**
**dass** das mindestens eine Lastübertragungselement (1) derart beschaffen ist, dass bei Vertikalbelastung dessen Formänderung durch Fließen oder Kriechen geschieht.

10. Schachtfertigteil nach einem der Ansprüche 1 bis 9,
**dadurch gekennzeichnet,**
**dass** das mindestens eine Lastübertragungselement (1) derart beschaffen ist, dass es bei Vertikalbelastung nicht federnd ist.

11. Schachtfertigteil nach einem der Ansprüche 1 bis 10,
**dadurch gekennzeichnet,**
**dass** das mindestens eine Lastübertragungselement (1) derart beschaffen ist, dass dieses bei Vertikalbelastung zumindest in Grenzen elastisch verformbar ist.

12. Schachtfertigteil nach einem der Ansprüche 1 bis 11,
**dadurch gekennzeichnet,**
**dass** das mindestens eine Lastübertragungselement (1) dichtend ist.

13. Schachtfertigteil nach einem der Ansprüche 1 bis 12,
**dadurch gekennzeichnet,**
**dass** das mindestens eine Lastübertragungselement (1) aus einem Elastomer gebildet ist.

14. Schachtfertigteil nach einem der Ansprüche 1 bis 13,
**dadurch gekennzeichnet,**
**dass** das mindestens eine Lastübertragungselement (1) aus einem thermoplastischen Kunststoff besteht.

15. Schachtfertigteil nach einem der Ansprüche 1 bis 14,
**dadurch gekennzeichnet,**
**dass** das mindestens eine Lastübertragungselement (1) aus Polyethylen (PE) besteht.

16. Schachtfertigteil nach einem der Ansprüche 1 bis 15,
**dadurch gekennzeichnet,**
**dass** das mindestens eine Lastübertragungselement (1) aus einem zu einem Ring geschlossenen Längsprofil gebildet ist, das an den Enden z. B. durch Kleben, Schweißen od. dgl. verbunden ist.

17. Schachtfertigteil nach einem der Ansprüche 1 bis 16,
**dadurch gekennzeichnet,**
**dass** das mindestens eine Lastübertragungselement (1) aus einem Spritzgießteil gebildet ist.

18. Schachtfertigteil nach einem der Ansprüche 1 bis 16,
**dadurch gekennzeichnet,**
**dass** das mindestens eine Lastübertragungselement (1) aus einem Strangpressprofil gebildet ist.

19. Schachtfertigteil nach einem der Ansprüche 1 bis 18,
**dadurch gekennzeichnet,**
**dass** das mindestens eine Lastübertragungselement (1) im Querschnitt etwa viereckig, insbesondere quadratisch oder rechteckig, ausgebildet ist.

20. Schachtfertigteil nach einem der Ansprüche 1 bis 19,
**dadurch gekennzeichnet,**
**dass** das mindestens eine Lastübertragungselement (1) eine Breite in der Größenordnung von etwa 6 mm bis 10 mm und eine Höhe in der Größenordnung von etwa 8 mm bis 10 mm aufweist.

21. Schachtfertigteil nach einem der Ansprüche 1 bis 20,
**dadurch gekennzeichnet,**
**dass** das mindestens eine Lastübertragungselement (1) etwa auf der Höhe seiner Innenfläche (13) auf einer Seite oder auf beiden Seiten abstrebende Leisten (16) zur dichten Anlage an der inneren Ringfläche (2) aufweist.

22. Schachtfertigteil nach Anspruch 21,
**dadurch gekennzeichnet,**
**dass** die Innenfläche (13) und/oder die Leisten (16) des mindestens einen Lastübertragungselements (1) mit Vorsprüngen (29), z. B. Verzahnungen, versehen sind, die im abgestützten Stadium die Reibhaftung erhöhen und ein Zusammenziehen verhindern.

23. Schachtfertigteil nach einem der Ansprüche 1 bis 22,
**dadurch gekennzeichnet,**
**dass** das mindestens eine Lastübertragungselement (1) mindestens einen inneren Hohlraum (26) enthält, der durchgehend oder unterbrochen ist.

24. Schachtfertigteil nach einem der Ansprüche 3 bis 23,
**dadurch gekennzeichnet,**
**dass** der mindestens eine Verankerungsteil (8) des Lastübertragungselements (1) einzelne unter Belassung von Zwischenräumen (24) dazwischen aufeinanderfolgende Vorsprünge oder eine Verankerungsleiste, die vorzugsweise in Längsrichtung in Abständen aufeinanderfolgende Ausschnitte (24) enthält, aufweist.

25. Schachtfertigteil nach einem der Ansprüche 1 bis 24,
**dadurch gekennzeichnet,**
**dass** das mindestens eine Lastübertragungselement (1) auf der Höhe zwischen der Innenfläche (13) und der Stützfläche (4) zumindest auf einer Seite eine abstrebende Spannleiste (18) zum rutschsicheren Spannen und Halten in einer Aufnahme (21), z. B. Nut, einer Untermuffe (20) aufweist.

26. Schachtfertigteil nach einem der Ansprüche 1 bis 25,
**dadurch gekennzeichnet,**
**dass** das mindestens eine Lastübertragungselement (1) auf der seiner Innenfläche (13) gegenüberliegenden Seite zwei in Querrichtung beabstandete und überstehende Stützlippen (27, 28) aufweist, die bei vertikaler Belastung des Schachtfertigteils (3) und Abstützung dieses über das mindestens eine Lastübertragungselement (1) am Spitzende (22) eines nächstfolgenden unteren Schachtfertigteils (3) voneinanderweg spreizbar sind mit einhergehender Reibung am Spitzende (22) des unteren Schachtfertigteils (3) und derart abklappbar sind, dass eine vergrößerte Stützfläche (4) und Auflagefläche zur Abstützung am Spitzende (22) des unteren Schachtfertigteils (3) entsteht.

27. Schachtfertigteil nach Anspruch 26,
**dadurch gekennzeichnet,**
**dass** das mindestens eine Lastübertragungselement (1) auf der der Innenfläche (13) gegenüberliegenden Seite einen umgekehrt etwa U-förmigen oder V-förmigen Querschnitt aufweist.

28. Schachtfertigteil nach Anspruch 26 oder 27,
**dadurch gekennzeichnet,**
**dass** die Stützlippen (27, 28) auf den einander zugewandten Seiten Vorsprünge (29), z. B. Verzahnungen, aufweisen, die aufgrund erhöhter Reibung einer Rückstellung der Stützlippen (27, 28) entgegenwirken.

29. Schachtfertigteil nach einem der Ansprüche 26 bis 28,
**dadurch gekennzeichnet,**
**dass** der mindestens eine Verankerungsteil (8) in Bezug auf die beiden Stützlippen (27, 28) etwa mittig angeordnet ist.

30. Schachtfertigteil nach einem der Ansprüche 26 bis 29,
**dadurch gekennzeichnet,**
**dass** das mindestens eine Lastübertragungselement (1) auf seiner der Innenfläche (13) gegenüberliegenden Seite als saugnapfartig wirkender Saughalter ausgebildet ist.

31. Schachtfertigteil nach einem der Ansprüche 26 bis 30,
**dadurch gekennzeichnet,**
**dass** der Teil des mindestens eine Lastübertragungselements (1), der den mindestens einen Verankerungsteil (8) und/oder die Innenfläche (13) aufweist oder daran anschließt, aus einem Material größerer Härte als dasjenige der Stützlippen (27, 28) besteht und die Stützlippen (27, 28) elastisch sind.

32. Schachtfertigteil nach einem der Ansprüche 26 bis 31,
**dadurch gekennzeichnet,**
**dass** das mindestens eine Lastübertragungselement (1) aus einem Elastomer gebildet ist.

33. Schachtfertigteil nach einem der Ansprüche 1 bis 25,
**dadurch gekennzeichnet,**
**dass** bei dem mindestens einen Lastübertragungselement (1) die Innenfläche (13) und/oder die dieser gegenüberliegende Seite, z. B. Außenfläche (4), von außen nach innen hin vertieft ist, derart, dass bei vertikaler Belastung des Schachtfertigteils (3) und Abstützung dieses über das mindestens eine Lastübertragungselement (1) am Spitzende (22) eines nächstfolgenden unteren Schachtfertigteils (3) und unter Formänderung des Lastübertragungselements (1) eine Abflachung der Innenfläche (13) und/oder Außenfläche (4) mit Vergrößerung der Stützfläche (4) und Auflagefläche entsteht.

34. Schachtfertigteil nach einem der Ansprüche 1 bis 33,
**dadurch gekennzeichnet,**
**dass** die Abstützeinrichtung (11) zusätzlich zu dem mindestens einen Lastübertragungselement (1) zumindest eine Kompressionsdichtung (10) aufweist.

35. Schachtfertigteil nach Anspruch 34,
**dadurch gekennzeichnet,**
**dass** die mindestens eine Kompressionsdichtung (10) am Glockenmuffenende (5) durch bei der Herstellung des Schachtfertigteils (3) erfolgtes Einbetonieren mindestens eines Verankerungsteils (54) der Kompressionsdichtung (10) gehalten ist.

36. Schachtfertigteil nach Anspruch 34,
**dadurch gekennzeichnet,**
**dass** die mindestens eine Kompressionsdichtung (10) mit Verspannung auf ein Spitzende (22) eines Schachtfertigteils (3) aufgezogen ist.

37. Schachtfertigteil nach einem der Ansprüche 34 bis 36,
**dadurch gekennzeichnet,**
**dass** die mindestens eine Kompressionsdichtung (10) aus einem Elastomer gebildet und elastisch verformbar ist.

38. Schachtfertigteil nach einem der Ansprüche 1 bis 37,
**dadurch gekennzeichnet,**
**dass** die mindestens eine Kompressionsdichtung (10) ein eigenständiges, von dem mindestens einen Lastübertragungselement (1) separiertes Bauteil ist.

39. Schachtfertigteil nach einem der Ansprüche 1 bis 37,
**dadurch gekennzeichnet,**
**dass** das mindestens eine Lastübertragungselement (1) und die mindestens eine Kompressionsdichtung (10) ein einstückiges Dichtelement (65) bilden.

40. Schachtfertigteil nach Anspruch 39,
**dadurch gekennzeichnet,**
**dass** bei dem einstückigen Dichtelement (65) die Kompressionsdichtung (10) elastisch und das Lastübertragungselement (1) plastisch verformbar ist.

41. Schachtfertigteil nach Anspruch 39 oder 40,
**dadurch gekennzeichnet,**
**dass** das einstückige Dichtelement (65) aus einem Elastomer gebildet ist.

42. Schachtfertigteil nach einem der Ansprüche 39 bis 41,
**dadurch gekennzeichnet,**
**dass** das einstückige Dichtelement (65) als Ring ausgebildet ist.

43. Schachtfertigteil nach einem der Ansprüche 39 bis 42,
**dadurch gekennzeichnet, dass** das einstückige Dichtelement (65) aus einem Spritzgießteil gebildet ist.

44. Schachtfertigteil nach einem der Ansprüche 39 bis 42,
**dadurch gekennzeichnet,**
**dass** das einstückige Dichtelement (65) aus einem Strangpressprofil gebildet ist.

45. Schachtfertigteil nach einem der Ansprüche 39 bis 44,
**dadurch gekennzeichnet,**
**dass** bei dem einstückigen Dichtelement (65) dessen mindestens ein Lastübertragungselement (1) eine größere Härte aufweist als dessen mindestens eine Kompressionsdichtung (10) und dass beide Komponenten des Dichtelements (65) untrennbar zu einer Einheit verbunden sind, insbesondere z. B. durch Koextrudieren zweier verschiedener Materialien in einem Spritzvorgang.

46. Schachtfertigteil nach einem der Ansprüche 39 bis 45,
**dadurch gekennzeichnet,**
**dass** das einstückige Dichtelement (65) am Glockenmuffenende (5) durch bei der Herstellung des Schachtfertigteils (3) erfolgtes Einbetonieren mindestens eines Verankerungsteils (54, 8) der Kompressionsdichtung (10) und/oder des Lastübertragungselements (1) gehalten ist.

47. Schachtfertigteil nach einem der Ansprüche 39 bis 45,
**dadurch gekennzeichnet,**
**dass** das einstückige Dichtelement (65) mit Verspannung auf ein Spitzende (22) des Schachtfertigteils (3) aufgezogen ist.

48. Verfahren zur Herstellung eines Schachtfertigteils, insbesondere nach einem oder mehreren der vorhergehenden Ansprüche,
**gekennzeichnet durch**
dessen Herstellung nach dem Rüttelpress- oder Gießverfahren in einer Form, die an einem Ende zur Formgebung des Glockenmuffenendes (5) mittels einer entsprechend geformten Untermuffe (20) geschlossen wird, die für die verschiebungssichere Aufnahme des mindestens einen Lastübertragungselements (1) bei der Herstellung eine dieses aufnehmende, an deren Form und Abmessung angepasste Aufnahme (21), z. B. Ringnut, enthält, in die das mindestens eine Lastübertragungselement (1) eingebracht wird.

49. Verfahren nach Anspruch 46,
**dadurch gekennzeichnet,**
**dass** die Aufnahme (21) etwa U-förmig oder etwa W-förmig ausgebildet ist.

50. Abstützeinrichtung für Schachtfertigteile aus Beton od. dgl., insbesondere nach einem oder mehreren der vorhergehenden Ansprüche,
**gekennzeichnet durch**
deren Ausbildung mit den Merkmalen in einem oder mehreren der vorhergehenden, die Abstützeinrichtung (11) betreffende Merkmale enthaltenden Ansprüche.
